# EUROPÄISCHE PATENTSCHRIFT

(11) **EP 2 286 648 B1**
(45) Veröffentlichungstag und Bekanntmachung des Hinweises auf die Patenterteilung: **26.02.2020**
(21) Anmeldenummer: 10401074.9
(22) Anmeldetag: 04.06.2010
(51) Int. Cl.: A01B 61/04

(54) **Zustreichvorrichtung**
Smoothing device
Dispositif d'enduit

(30) Priorität: 09.06.2009 DE 102009025937
(43) Veröffentlichungstag der Anmeldung: 23.02.2011
(73) Patentinhaber: Amazonen-Werke H. Dreyer GmbH & Co. KG, 49205 Hasbergen (DE)
(72) Erfinder: Ammermann, Wilfried, 26203 Wadenburg (DE); Feldhaus, Werner, 27801 Dötlingen/Geveshausen (DE); Steen, Rüdiger, 27798 Hude (DE); Tiessen, Reimer Uwe, 26135 Oldenburg (DE)

(56) Entgegenhaltungen:
- EP-A1- 0 089 053
- EP-A1- 1 889 530
- US-A1- 2008 308 022

## Beschreibung

Die Erfindung betrifft eine Zustreichvorrichtung gemäß des Oberbegriffes des Patentanspruches 1.

Eine derartige Zustreichvorrichtung ist beispielsweise durch die EP 1 889 530 A1 bekannt. Diese Zustreichvorrichtung weist eine Gelenkvorrichtung auf, mittels der sie an einer Halterung befestigt ist. Die Gelenkachse der Gelenkvorrichtung liegt oberhalb des Tragbalkens der Zustreicherelemente der Zustreichvorrichtung. Um diese Gelenkachse können die Zustreicherelemente bei Rückwärtsfahrt der Maschine nach vorne verschwenken, so dass Beschädigungen vermieden werden. Durch die Lage der Schwenkachse senkrecht oberhalb des Tragbalkens muss der Tragbalken bei Ausweichbewegungen sehr weit nach vorne ausweichen. Dies führt dazu, dass die Zustreihvorrichtung relativ weit hinter den Bodenbearbeitungswerkzeugen oder Säscharen angeordnet sein muss.

Der Erfindung liegt die Aufgabe zugrunde, eine verbesserte Anordnung der Gelenkvorrichtung für eine Zustreichvorrichtung mit einem verbesserten Ausweichverhalten der Zustreicherelemente zu schaffen.

Diese Aufgabe wird erfindungsgemäß dadurch gelöst, dass die Gelenkachse der Gelenkvorrichtung sich beabstandet hinter dem Tragbalken befindet. Infolge dieser Maßnahmen wird aufgrund der Anordnung und Lage der Gelenkachse der Gelenkvorrichtung erreicht, dass bei Ausweichbewegungen der Zustreichvorrichtung bei Rückwärtsfahrt der Maschine der Tragbalken der Zustreichvorrichtung nach oben und hinten ausweicht. Hierdurch kann die Zustreichvorrichtung dichter an die Bodenbearbeitungswerkzeuge und/oder Säschare der landwirtschaftlichen Maschine herangerückt werden, so dass sich eine kompaktere Bauweise der Maschine ergibt. Die Zustreichelemente werden beim Rückwärtsfahren oder Absenken der Maschine geschont; sie weichen aus und werden nicht verbogen.

Bei einer Zustreichvorrichtung, wobei der Gelenkvorrichtung eine federnde Überlastsicherungseinheit, die den Tragbalken mit den Zustreichelementen in Arbeitsstellung hält, zugeordnet ist, ist vorgesehen, dass die Überlastsicherungseinheit einen federbelasteten Hebel mit einem schrägen und/oder keilförmigen Ansatz aufweist, dass der Ansatz mit einem Halteelement zusammenwirkt. Hierdurch wird eine vorteilhafte Ausgestaltung eines einfachen Überlastsicherungselementes erreicht.

Eine einfache Befestigung des Tragbalkens in erfindungsgemäßer Weise lässt sich dadurch verwirklichen, dass von der Halterung sich eine Strebe über den Tragbalken hinaus nach hinten erstreckt, dass sich von dem Tragbalken nach hinten eine Tragstrebe erstreckt, dass die Strebe und die Tragstrebe mittels einer Gelenkverbindung verschwenkbar miteinander verbunden sind.

Eine vorteilhafte Lage der Gelenkachse ergibt sich dadurch, dass die Gelenkachse zumindest um 10 cm, vorzugsweise 15 cm, gegenüber dem Tragbalken nach hinten versetzt angeordnet ist.

Weitere Einzelheiten der Erfindung sind der Beispielsbeschreibung und den Zeichnungen zu entnehmen. Hierbei zeigen
- Fig. 1: die Zustreicheinrichtung in perspektivischer Darstellung, in Teilansicht und in Arbeitsstellung,
- Fig. 2: die Zustreicheinrichtung in anderer perspektivischer Darstellung, in Teilansicht und in Arbeitsstellung,
- Fig. 3: die Zustreicheinrichtung in Seitenansicht und in Betriebsstellung und
- Fig. 4: die Zustreicheinrichtung in Ausweichstellung beim Rückwärtsfahren und in Seitenansicht.

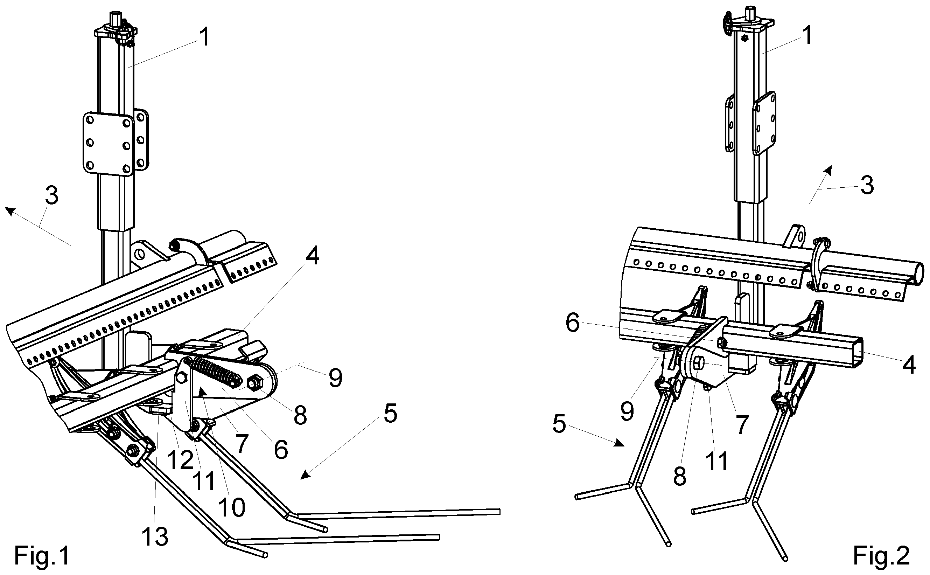

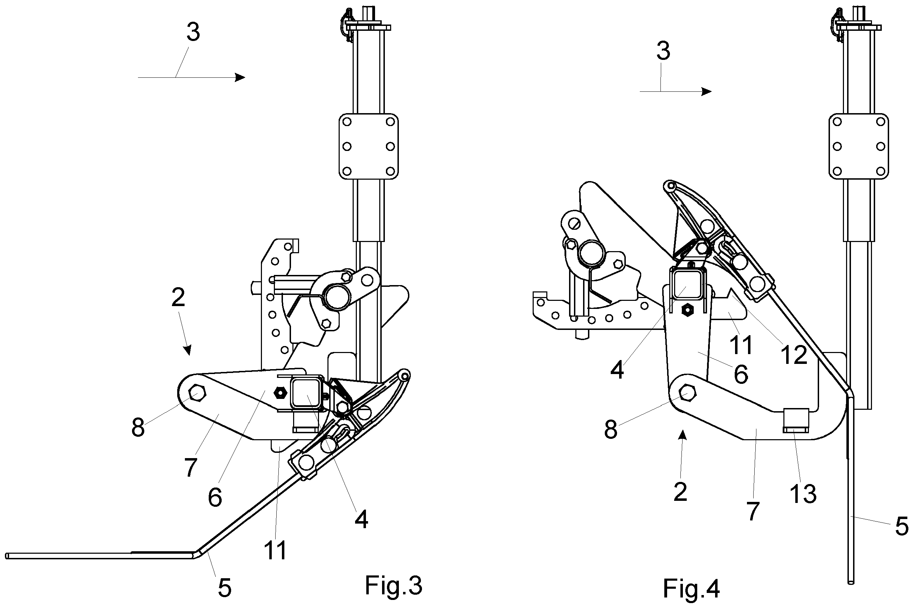

Die Zustreicheinrichtung gemäß den Fig. 1 bis 3 ist in Arbeits- bzw. Betriebsstellung dargestellt und mittels der beabstandet zueinander angeordneten Tragarme 1 an einer nicht datgestellten Haltevorrichtung einer Bodenbearbeitungs- oder Verteilmaschine angeordnet. An der die Tragarme 1 aufweisenden Haltevorrichtung ist mittels einer Gelenkvorrichtung 2 der sich quer zur Fahrtrichtung 3 erstreckende Tragbalken 4, an dem die Zustreicherelemente 5 der Zustreichvorrichtung angeordnet sind, befestigt. Jede Gelenkvorrichtung 2 weist im Bereich der jeweiligen Tragarme 1 sich von dem Tragbalken 4 nach hinten erstreckende Tragstrebe auf. Weiterhin weist jede Gelenkvorrichtung 2 eine an dem jeweiligen Tragarm 1 befestigte über den Tragbalken 4 sich nach hinten heraus erstreckende Strebe 7 auf. An ihren hinteren Enden sind die Strebe 7 und die Tragstrebe 6 über eine Gelenkverbindung 8 miteinander verbunden. Die Gelenkachse 9 der Gelenkverbindung 8 und somit der Gelenkvorrichtung 2 erstreckt sich quer zur Fahrtrichtung 3. Die Gelenkachse 9 der Gelenkvorrichtung 2 befindet sich beabstandet hinter dem Tragbalken 4. Hierbei ist die Gelenkachse 9 zumindest um 10 cm, vorzugsweise 15 cm gegenüber dem Tragbalken 4 nach hinten versetzt angeordnet, wie insbesondere die Fig. 3 erkennen lässt.

Die Strebe 7 und die Tragstrebe 6 sind somit mittels einer Gelenkverbindung 8 schwenkbar miteinander verbunden.

Die Gelenkvorrichtung 2 weist eine federnde Überlastsicherungseinheit 10 auf, die den Tragbalken 4 mit den Zustreichelementen 5 in der in den Fig. 1 bis 3 dargestellten Arbeitsstellung hält. Die Überlastsicherungseinheit 10 weist einen federbelasteten Hebel 11 mit dem schrägen bzw. keilförmigen Ansatz 12 auf. Dieser Ansatz 12 wirkt mit dem am Tragbalken 4 angeordnetem Halteelement 13 zusammen, wenn sich die Zustreichvorrichtung in der in den Fig. 1 bis 3 dargestellten Betriebsstellung befindet. Hierbei fasst der keilförmige bzw. schräge Ansatz 12 hinter den am Tragbalken 4 der Zustreichvorrichtung angeordnetem Haltelement 13 und hält den mit den Tragbalken 4 Zustreichelementen 5 in Betriebsstellung.

Bei Rückwärtsfahrt drücken die Zustreichelemente 5 den Tragbalken 4 über den keilförmigen Ansatz 12 gegen die Federkraft des federbelasteten Hebels 11, so dass der Tragbalken 4 mit den Zustreichelementen 5 ausrastet und um die Gelenkachse 9 nach hinten-oben in die in Fig. 4 dargestellte Position geschwenkt. Hierdurch werden Beschädigungen an der Zustreichvorrichtung mit den Zustreichelementen 5 vermieden.

## Patentansprüche

1. Zustreichvorrichtung für eine landwirtschaftliche Bodenbearbeitungs- und/oder Verteilmaschine mit einem Rahmen und daran angeordneten Bodenbearbeitungswerkzeugen und/oder Säscharen, wobei hinter dem Bodenbearbeitungswerkzeugen und/oder Säscharen die Zustreichvorrichtung mittels einer Haltevorrichtung am Rahmen angeordnet ist, wobei die Haltevorrichtung eine an Tragarmen (1) befestigte Gelenkvorrichtung (2) mit Gelenkverbindung (8) aufweist, wobei an der Gelenkvorrichtung (2) zumindest ein quer zur Fahrtrichtung (3) verlaufender Tragbalken (4), an dem die Zustreichelemente (5) angeordnet sind, mittels der Gelenkverbindung (8), deren Gelenkachse (9) quer zur Fahrtrichtung (3) verläuft, um die Gelenkachse (9) verdrehbar befestigt ist, wobei die Gelenkverbindung (8) derart ausgebildet ist, dass der Tragbalken (4) mit den Zustreichelementen (5) bei Rückwärtsfahrt der Maschine derart um die Gelenkachse (9) verschwenkt, dass die freien Enden der Zustreichelemente (5) gegenüber dem Rahmen in Fahrtrichtung (3) verschwenken, **dadurch gekennzeichnet, dass** die Gelenkachse (9) der Gelenkverbindung (8) sich beabstandet hinter dem Tragbalken (4) befindet

2. Zustreichvorrichtung nach Anspruch 1, wobei der Gelenkvorrichtung (2) eine federnde Überlastsicherungseinheit (10), die den Tragbalken (4) mit den Zustreichelementen (5) in Arbeitsstellung hält, zugeordnet ist, **dadurch gekennzeichnet, dass** die Überlastsicherungseinheit (10) einen federbelasteten Hebel (11) mit einem schrägen und/oder keilförmigen Ansatz (12) aufweist, dass der Ansatz (12) mit einem Halteelement (13) zusammenwirkt.

3. Zustreichvorrichtung nach Anspruch 2, **dadurch gekennzeichnet, dass** der Hebel (11) dem Tragbalken (4) und der Ansatz (12) der Gelenkvorrichtung (2) zugeordnet ist.

4. Zustreichvorrichtung nach Anspruch 2, **dadurch gekennzeichnet, dass** der Ansatz (12) dem Tragbalken (4) und der Hebel (11) der Gelenkvorrichtung (2) zugeordnet ist.

5. Zustreichvorrichtung nach einem oder mehreren der vorstehenden Ansprüche, **dadurch gekennzeichnet, dass** von der Gelenkvorrichtung (2) sich eine Strebe (7) über den Tragbalken (4) hinaus nach hinten erstreckt, dass sich von dem Tragbalken (4) nach hinten eine Tragstrebe (6) erstreckt, dass die Strebe (7) und die Tragstrebe (6) mittels der Gelenkverbindung (8) verschwenkbar miteinander verbunden sind.

6. Zustreichvorrichtung nach einem oder mehreren der vorstehenden Ansprüche, **dadurch gekennzeichnet, dass** die Gelenkachse (9) zumindest um 10 cm, vorzugsweise 15 cm, gegenüber dem Tragbalken (4) nach hinten versetzt angeordnet ist.

## Claims

1. Smoothing device for an agricultural soil cultivating and/or distribution machine having a frame and soil cultivating tools and/or sowing coulters arranged thereon, wherein, behind the soil cultivating tools and/or sowing coulters, the smoothing device is arranged on the frame by means of a holding device, wherein the holding device has an articulation device (2), fastened to support arms (1), with an articulated joint (8), wherein at least one support beam (4) which extends transversely to the direction of travel (3) and on which the smoothing elements (5) are arranged is fastened to the articulated joint (2) by means of the articulated joint (8), the articulation axis (9) of which extends transversely to the direction of travel (3), so as to be rotatable about the articulation axis (9), wherein the articulated joint (8) is configured such that, when the machine is travelling in reverse, the support beam (4) with the smoothing elements (5) pivots about the articulation axis (9) such that the free ends of the smoothing elements (5) pivot into the direction of travel (3) with respect to the frame, **characterized in that** the articulation axis (9) of the articulated joint (8) is located behind the support beam (4) at a distance therefrom.

2. Smoothing device according to Claim 1, wherein the articulation device (2) is assigned a resilient overload protection unit (10), which keeps the support beam (4) with the smoothing elements (5) in the working position, **characterized in that** the overload protection unit (10) has a spring-loaded lever (11) with an inclined and/or wedge-shaped attachment (12), **in that** the attachment (12) cooperates with a holding element (13) .

3. Smoothing device according to Claim 2, **characterized in that** the lever (11) is assigned to the support beam (4) and the attachment (12) is assigned to the articulation device (2).

4. Smoothing device according to Claim 2, **characterized in that** the attachment (12) is assigned to the support beam (4) and the lever (11) is assigned to the articulation device (2).

5. Smoothing device according to one or more of the preceding claims, **characterized in that** a strut (7) extends rearwardly from the articulation device (2) beyond the support beam (4), **in that** a support strut (6) extends rearwardly from the support beam (4), **in that** the strut (7) and the support strut (6) are connected together in a pivotable manner by means of the articulated joint (8).

6. Smoothing device according to one or more of the preceding claims, **characterized in that** the articulation axis (9) is arranged in a manner offset at least by 10 cm, preferably 15 cm, towards the rear with respect to the support beam (4).

## Revendications

1. Dispositif d'égalisation pour une machine agricole de travail du sol et/ou de distribution, comprenant un cadre et des outils de travail du sol et/ou des socs de semoir disposés sur celui-ci, le dispositif d'égalisation étant disposé sur le cadre au moyen d'un dispositif de fixation derrière les outils de travail du sol et/ou les socs de semoir, le dispositif de fixation présentant un dispositif d'articulation (2) fixé à des bras de support (1), avec une liaison articulée (8), au moins une poutre porteuse (4) s'étendant transversalement à la direction de conduite (3), sur laquelle sont disposés les éléments d'égalisation (5), étant fixée au dispositif d'articulation (2), de manière rotative autour d'axes d'articulation (9) au moyen de la liaison articulée (8) dont l'axe d'articulation (9) s'étend transversalement à la direction de conduite (3), la liaison articulée (8) étant réalisée de telle sorte que la poutre porteuse (4) pivote avec les éléments d'égalisation (5) autour de l'axe d'articulation (9) lors de la conduite en marche arrière de la machine, de telle sorte que les extrémités libres des éléments d'égalisation (5) pivotent par rapport au cadre dans la direction de conduite (3), **caractérisé en ce que** l'axe d'articulation (9) de la liaison articulée (8) est situé à distance derrière la poutre porteuse (4).

2. Dispositif d'égalisation selon la revendication 1, dans lequel une unité de protection contre les surcharges (10) à ressort est associée au dispositif d'articulation (2), laquelle retient la poutre porteuse (4) avec les éléments d'égalisation (5) dans la position de travail, **caractérisé en ce que** l'unité de protection contre les surcharges (10) présente un levier sollicité par ressort (11) avec une pièce (12) oblique et/ou en forme de clavette, et **en ce que** la pièce (12) coopère avec un élément de retenue (13).

3. Dispositif d'égalisation selon la revendication 2, **caractérisé en ce que** le levier (11) est associé à la poutre porteuse (4) et la pièce (12) est associé au dispositif d'articulation (2).

4. Dispositif d'égalisation selon la revendication 2, **caractérisé en ce que** la pièce (12) est associée à la poutre porteuse (4) et/ou le levier (11) est associé au dispositif d'articulation (2).

5. Dispositif d'égalisation selon l'une quelconque ou plusieurs des revendications précédentes, **caractérisé en ce qu'**une entretoise (7) s'étend vers l'arrière au-delà de la poutre porteuse (4) depuis le dispositif d'articulation (2), **en ce qu'**une entretoise de support (6) s'étend vers l'arrière depuis la poutre porteuse (4), **en ce que** l'entretoise (7) et l'entretoise de support (6) sont reliées l'une à l'autre de manière pivotante au moyen de la liaison articulée (8).

6. Dispositif d'égalisation selon l'une quelconque ou plusieurs des revendications précédentes, **caractérisé en ce que** l'axe d'articulation (9) est disposé de manière décalée vers l'arrière d'au moins 10 cm, de préférence de 15 cm, par rapport à la poutre porteuse (4).
